## Europäisches Patentamt

## European Patent Office
## Office européen des brevets

(11) Veröffentlichungsnummer: **0 127 054**
**A2**

(12) ## EUROPÄISCHE PATENTANMELDUNG

(21) Anmeldenummer: 84105466.1

(22) Anmeldetag: 14.05.84

(51) Int. Cl.³: **C 08 K 3/36**
**C 08 K 3/22**

(30) Priorität: 25.05.83 DE 3318963

(43) Veröffentlichungstag der Anmeldung:
05.12.84 Patentblatt 84/49

(84) Benannte Vertragsstaaten:
AT BE CH DE FR GB IT LI NL SE

(71) Anmelder: Siemens Aktiengesellschaft
Berlin und München Wittelsbacherplatz 2
D-8000 München 2(DE)

(72) Erfinder: von Gentzkow, Wolfgang, Dr.
Zwetschgenweg 1
D-8524 Kleinsendelbach(DE)

(72) Erfinder: Henkel, Hans-Joachim, Dr.
Philip-Reis-Strasse 34
D-8520 Erlangen(DE)

(72) Erfinder: Müller, Norbert, Dr.
von Hauck-Strasse 15b
D-8522 Herzogenaurach(DE)

(72) Erfinder: Schmiedel, Manfred
Volkacher Strasse 26
D-8500 Grossgründlach(DE)

(54) Stabilisierung organischer Polymermaterialien.

(57) Die Erfindung betrifft die Stabilisierung von mit Übergangsmetallen in Berührung stehenden bzw. Übergangsmetalle enthaltenden organischen Polymeren gegen thermisch beschleunigte oxidative Alterung und stellt sich die Aufgabe, für diesen Zweck eine zusätzliche stabilisierende Komponente anzugeben, welche neben üblichen Oxidationsinhibitoren und/oder Metalldesaktivatoren eingesetzt wird. Die Erfindung sieht dazu die Verwendung von gefällten oder pyrogenen, hochdispersen amorphen Kieselsäuren oder von Gemischen aus hochdispersen Kieselsäuren und hochdispersen Aluminiumoxiden, jeweils mit einer Partikelgröße bis zu 50 $\mu$m bzw. einer Agglomeratgröße bis zu 100 $\mu$m, vor.

EP 0 127 054 A2

Croydon Printing Company Ltd.

SIEMENS AKTIENGESELLSCHAFT          Unser Zeichen
Berlin und München                  VPA 83 P 3 1 6 2 E

## Stabilisierung organischer Polymermaterialien

Die Erfindung betrifft Stabilisatoren für mit Übergangsmetallen in Berührung stehende bzw. Übergangsmetalle enthaltende organische Polymere zur Inhibierung der thermisch beschleunigten oxidativen Alterung.

Viele organische Polymermaterialien, insbesondere Polyolefine, aber auch andere Polymere, wie Polyoxymethylen, Polyamide und ungesättigte Polyesterharze, die in der Elektrotechnik für Isolationszwecke eingesetzt werden, unterliegen in Gegenwart von Übergangsmetallen oder Übergangsmetallionen einer beschleunigten thermisch-oxidativen Alterung. Da sich dabei ihre elektrischen und mechanischen Eigenschaften verschlechtern, wird ihre Gebrauchsdauer zum Teil erheblich reduziert.

Für den Einsatz von Polyolefinen und vernetzten Polyolefinen als Kabel- und Leitungsisolierungen wurde insbesondere hinsichtlich des direkten Kontakts des Isoliermaterials mit dem Leitermaterial Kupfer das Problem des stark alterungsbeschleunigenden Einflusses dieses Metalls untersucht. Zur Desaktivierung des Kupfers wurde eine große Anzahl von Kupferdesaktivatoren vorgeschlagen. Einige Produkte befinden sich seit Jahren im technischen Einsatz. Außerdem ist auch bereits der Einsatz von Oxidationsinhibitoren bekannt sowie die Verwendung von Stabilisatorkombinationen aus einem Metalldesaktivator (für Kupfer) und einem Oxidationsinhibitor (siehe DE-PS 27 03 558 bzw. DE-OS 28 23 846).

Bh 2 Koe / 24.5.1983

Die aus einer Vielzahl grundlegender Untersuchungen bekannte katalytische Wirksamkeit anderer Übergangsmetalle, die den alterungsbeschleunigenden Einfluß von Kupfer sogar noch übertreffen können, wurde bisher technisch kaum berücksichtigt. Zu den Metallen, die hinsichtlich ihrer alterungsbeschleunigenden Aktivität Beachtung verdienen, gehören insbesondere Eisen und all jene Metalle, die als Legierungsbestandteile zusammen mit Eisen in den bei der Kunststoffverarbeitung verwendeten Maschinen und Werkzeugen mit den Polymermaterialien in Kontakt kommen. Die Eisenbestimmung der meisten Polyolefinmischungen ergibt Gehalte > 1 ppm. Polyolefine, die den Mischprozeß mehrfach durchlaufen haben, insbesondere solche, die Füllstoffe und polare oder korrosive Additive enthalten, weisen nicht selten Eisenkonzentrationen > 10 ppm auf.

Die Tatsache, daß Möglichkeiten zur Desaktivierung dieser Metalle bisher kaum untersucht wurden, ist ein Beleg für die im allgemeinen noch relativ geringen Anforderungen an die thermisch-oxidative Stabilität, insbesondere der unvernetzten Polymermaterialien. So läßt sich beispielsweise unvernetztes Polyethylen wegen seiner thermoplastischen Verformbarkeit im Dauerbetrieb nur mit Temperaturen bis maximal 70°C belasten. Mit dem zunehmenden Einsatz vernetzter Polyolefine, deren technische Verwendung bis zu Temperaturen von 150°C möglich erscheint, wird eine verbesserte Stabilisierung gegen thermooxidative Alterung benötigt. Da radikalisch vernetzte Polyolefine infolge ihres erhöhten Anteils an leicht oxidablen tertiären Kohlenstoffatomen und infolge der bei der Vernetzung gebildeten langlebigen Radikale oxidationsempfindlicher sind als unvernetzte Polymere und da eine verbesserte Stabilisierung durch die alleinige Verwendung von Oxidationsinhibitoren wegen ihrer teilweisen Inaktivierung bei der Vernetzung auf Schwierigkeiten stößt, erscheint die Desaktivierung von Eisen und anderen metallischen Verunreinigungen als aussichtsreiches Unterfangen, um die thermische Belastbarkeit dieser relativ preiswert zugänglichen Massenkunststoffe zu steigern.

Aufgabe der Erfindung ist es, zur Stabilisierung organischer Polymerer gegen thermisch-oxidativen Abbau zusätzlich zu den üblichen Oxidationsinhibitoren und/oder Metalldesaktivatoren eine stabilisierende Komponente anzugeben, welche die katalytische Wirkung von Eisen oder anderer Übergangsmetalle vermindert und auf diese Weise die Stabilität der Polymeren erhöht und damit deren Lebensdauer, insbesondere bei hohen Dauerbetriebstemperaturen, verlängert.

Dies wird erfindungsgemäß durch die Verwendung von gefällten oder pyrogenen, hochdispersen amorphen Kieselsäuren oder von Gemischen aus hochdispersen Kieselsäuren und hochdispersen Aluminiumoxiden, jeweils mit einer Partikelgröße bis zu 50 μm bzw. einer Agglomeratgröße bis zu 100 μm, neben üblichen Oxidationsinhibitoren und/oder Metalldesaktivatoren erreicht.

Überraschenderweise wurde nämlich gefunden, daß die erfindungsgemäß - neben üblichen Oxidationsinhibitoren und/oder Metalldesaktivatoren - verwendete zusätzliche stabilisierende Komponente, nämlich gefällte bzw. pyrogene Kieselsäuren und Gemische aus Kieselsäuren und Aluminiumoxiden, in feinster Verteilung im Polymeren die katalytische Aktivität von Eisen und anderen Metallen bzw. von Metallionen erheblich vermindern. Dabei wird diese stabilisierende Komponente besonders vorteilhaft im Gemisch mit üblichen, insbesondere einbaubaren bzw. eingebauten, Oxidationsinhibitoren eingesetzt (siehe DE-OS 28 23 820). Befindet sich das zu
stabilisierende organische Polymere im Kontakt mit
Kupfer, so erweist sich die Verwendung der aus der
DE-PS 27 03 558 bekannten Stabilisatorkombination aus
N,N'-Bis-salicyloyl-hydrazin als Metalldesaktivator und
oligomerem 2,2,4-Trimethyl-1,2-dihydrochinolin als
Oxidationsinhibitor als besonders vorteilhaft.

Der Einsatz der erfindungsgemäßen stabilisierenden
Komponente ist - ohne Nachteile - auch bei der Verwendung weiterer Additive, wie UV-Absorber, Lichtschutzmittel, Peroxide, peroxidzerstörende Verbindungen, vernetzungsverstärkende Verbindungen, Nukleierungsmittel, Weichmacher, Flexibilisatoren, Verarbeitungshilfsmittel, Antistatika, Flammschutzmittel, Ruß,
Glasfasern, Treibmittel und Füllstoffe, wie Kaolin und
Kreide, möglich. Der Einsatz der zusätzlichen stabilisierenden Komponente weist darüber hinaus den Vorteil
auf, daß sie farblos ist und deswegen problemlos in
gefärbten Mischungen, also in Gegenwart von Farbstoffen, eingesetzt werden kann.

Die für die erfindungsgemäße Verwendung erforderliche
Konzentration der zusätzlichen stabilisierenden Komponente ist abhängig von den zu stabilisierenden
Polymeren und von den eingesetzten Oxidationsinhibitoren und/oder Metalldesaktivatoren sowie von anderen
Additiven. Vorteilhaft liegt die Konzentration im
Bereich von 0,1 bis 5 %; vorzugsweise werden Konzentrationen von 0,5 bis 2 % verwendet.

Als stabilisierende Komponente werden vorzugsweise pyrogene und/oder gefällte Kieselsäuren eingesetzt. Pyrogene bzw. gefällte Kieselsäuren, die im allgemeinen die chemische Zusammensetzung $SiO_2 \cdot x\ H_2O$ aufweisen, sind im Vergleich zu organischen Stabilisatoren technisch relativ einfach herstellbar und deshalb kommerziell kostengünstig zugänglich. Als Gemisch aus einer hochdispersen Kieselsäure und einem hochdispersen Aluminiumoxid kann vorteilhaft Metakaolinit verwendet werden, d.h. entwässerter Kaolinit ($Al_2O_3 \cdot 2\ SiO_2 \cdot 2\ H_2O$).

Für die Wirksamkeit der erfindungsgemäß verwendeten stabilisierenden Komponente ist eine gute Dispergierung im zu stabilisierenden Polymermaterial von großer Wichtigkeit. Die Einarbeitung in ein Polymeres, wie beispielsweise in ein Polyolefin für Kabel- und Leitungsisolierungen, kann entweder durch direkte Einarbeitung in der endgültigen Konzentration oder über die Herstellung eines Vorkonzentrats (Masterbatch-Verfahren) und nachfolgendes Einmischen in weiteres Polymermaterial zu Isoliermischungen mit der gewünschten Konzentration erfolgen. Sehr wichtig ist dabei die Reihenfolge der Zugabe der einzelnen Mischungsbestandteile zum System. Da jede Dispergierung abwechselnd aus Zerteilung und Benetzung besteht, kommt es darauf an, während des Dispergierens genügend hohe Scherkräfte anzuwenden und für eine gewisse Polarität des Systems, beispielsweise durch geeignete Zusätze, zu sorgen. Besonders vorteilhaft ist deshalb das Einmischen der erfindungsgemäßen stabilisierenden Komponente in phlegmatisierter, d.h. verarbeitungsfreundlicher Form und eine genaue Abstimmung der zu wählenden Konzentration auf das benutzte Dispergiergerät.

Die erfindungsgemäße zusätzliche stabilisierende Komponente wird insbesondere bei der Stabilisierung folgender Polymermaterialien eingesetzt: Thermoplaste, thermoplastische bzw. vernetzte Elastomere und vernetzte Thermoplaste, insbesondere vernetzte Polyolefine, sowie Reaktionsharze, wie Polyurethane, Epoxidharze und ungesättigte Polyesterharze (UP-Harze). Unter den thermoplastischen Polymeren können vor allem Polyolefine, insbesondere Polyethylene, Polypropylene, Ethylen- bzw. Propylen-Copolymere untereinander und mit anderen Comonomeren, wie Vinylacetat, Ethylacrylat und Butylacrylat, sowie Polyblends auf der Basis von Polyethylenen bzw. Polypropylenen, aber auch Polyoxymethylene, Polyoxyphenylene und Polyamide stabilisiert werden. Als vernetzte Polyolefine kommen insbesondere vernetzte Polyethylene, vorzugsweise Polyethylen niederer Dichte, in Betracht, daneben aber auch allgemein vernetzte Thermoplaste und vernetzte Elastomere auf Polyolefinbasis, wie Ethylen-Vinylacetat, Ethylen-Propylen-Copolymere und Ethylen-Propylen-Dien-Terpolymere, sowie Butylkautschuk, Naturkautschuk und Silikonkautschuk. Dabei werden insbesondere solche Polymere verwendet, die radikalisch vernetzt sind, d.h. bei denen die Vernetzung durch peroxidische Initiierung oder durch ionisierende Strahlen ($\beta$-, $\gamma$-oder Röntgenstrahlung) erfolgt.

Die erfindungsgemäße zusätzliche stabilisierende Komponente kann mit Vorteil überall dort verwendet werden, wo relativ leicht oxidable Isolierstoffe in Kontakt mit Übergangsmetallen eingesetzt werden oder - als Folge der technischen Verarbeitung und Formgebung - metallische Verunreinigungen enthalten, und wo unter extremen Einsatzbedingungen, d.h. hohen Temperaturen und/oder ionisierender Strahlung, eine beschleunigte oxidative

0127054

Alterung an sich stabiler Isoliermaterialien zu erwarten ist bzw. wo generell lange Expositionszeiten ohne wesentliche Eigenschaftseinbuße des verwendeten Materials überstanden werden müssen.

Polymere, die die erfindungsgemäße stabilisierende Komponente enthalten, können insbesondere als Kabel- und Leitungsisolierungen in der Starkstrom- und Nachrichtentechnik sowie für Formteile und für Bauteil- und Maschinenisolierungen Verwendung finden. Auch der Einsatz in gefüllten Nachrichtenkabeln ist möglich, da diese stabilisierende Komponente durch die Kabelfüllmassen nicht aus der Isolierschicht extrahiert wird und deshalb ihre Wirksamkeit behält.

Anhand von Ausführungsbeispielen soll die Erfindung noch näher erläutert werden.

### Beispiel 1

a) Mischungsherstellung

Die aus Tabelle 1 ersichtlichen Masseanteile LDPE (Hochdruckpolyethylen; $d = 0,918$ g/cm$^3$; $MFI_{190/2} = 0,2$) werden in einem Kneter bei einer Temperatur von 140°C plastifiziert. Nach der Zugabe von 0,5 Masseteilen TDC (oligomeres 2,2,4-Trimethyl-1,2-dihydrochinolin) und den aus Tabelle 1 ersichtlichen Masseanteilen BSH (N,N'-Bis-salicyloyl-hydrazin), KS 300 (pyrogene Kieselsäure mit einer spezifischen Oberfläche von 300 m$^2$/g), $TiO_2$ (Titandioxid) und FeHe (Eisensalz der n-Heptylsäure) wird bei einer Temperatur von 140 bis 150°C unter Stickstoff homogenisiert.

Tabelle 1: Zusammensetzung der Mischungen 1 bis 8

| Mischungs-Nr. | Masseanteile [%] der Mischungsbestandteile | | | | | |
|---|---|---|---|---|---|---|
| | LDPE | TDC | BSH | KS 300 | $TiO_2$ | FeHe |
| 1 | 99,5 | 0,5 | - | - | - | - |
| 2 | 99,5 | 0,5 | - | - | - | 0,01 |
| 3 | 98,5 | 0,5 | - | 1,0 | - | - |
| 4 | 98,5 | 0,5 | - | 1,0 | - | 0,01 |
| 5 | 98,0 | 0,5 | 0,5 | - | 1,0 | - |
| 6 | 98,0 | 0,5 | 0,5 | - | 1,0 | 0,01 |
| 7 | 97,0 | 0,5 | 0,5 | 1,0 | 1,0 | - |
| 8 | 97,0 | 0,5 | 0,5 | 1,0 | 1,0 | 0,01 |

b) Probenherstellung

Die in der vorstehend beschriebenen Weise hergestellten Mischungen werden granuliert. Die Mischungen 1 bis 4 werden bei einer Temperatur von 180°C zu 0,1 mm dicken Folien und die Mischungen 5 bis 8 zu 0,3 mm dicken Folien verpreßt (Preßzeit: 1 Minute). Durch Zusammenpressen einer Sandwichstruktur aus zwei vorgepreßten 0,3 mm dicken Folien und einem dazwischengelegten elektrolytisch frisch gereinigten Kupfergewebe (Gesamtdicke: 0,25 mm) bei 180°C werden Polyethylen/Kupfer-Sandwichfolien einer Gesamtdicke von 0,55 mm hergestellt (Preßzeit: 2 Minuten). Die 0,1 mm dicken Folien und die Sandwichfolien werden mit Elektronenstrahlen der Dosis 250 kGy bei Raumtemperatur vernetzt.

c) Alterungsprüfung

Die Proben der Mischungen 1 bis 4 werden in reinem Sauerstoff bei 135°C bzw. 155°C gealtert. Dabei wird die Sauerstoffaufnahme der Folien volumetrisch verfolgt

0127054

und der Zeitraum bis zum Beginn der Autoxidation, welche mit einer spontan einsetzenden und schnell ansteigenden Sauerstoffaufnahme durch die Folie einhergeht, als sogenannte Induktionsperiode ermittelt. Es werden jeweils wenigstens 5 Proben gleichzeitig gealtert, über die dabei erhaltenen Werte wird dann gemittelt. In Tabelle 2 sind die an den Proben nach Beispiel 1 mit Hilfe der volumetrischen Sauerstoffaufnahme ermittelten mittleren Induktionsperioden aufgeführt.

Tabelle 2: Alterungsergebnisse der Mischungen 1 bis 4

| Mischungs-Nr. | Induktionsperiode [h] bei | |
|---|---|---|
| | 135°C | 155°C |
| 1 | 712 | 172 |
| 2 | 16 | 4 |
| 3 | 840 | 210 |
| 4 | 840 | 206 |

Die Proben der Mischungen 5 bis 8 werden im Umluftofen bei Temperaturen von 150°C, 165°C bzw. 180°C gealtert. Dabei wird die Zeit bis zur einsetzenden Verfärbung der Sandwichfolien ermittelt. Die Verfärbung beginnt im allgemeinen an mehreren Stellen gleichzeitig, wobei zunächst grünliche Flecke erscheinen, die sich schnell braun verfärben. Nach dem Auftreten der ersten Verfärbung altert die Probe innerhalb kurzer Zeit rasch und vollständig durch.

In Tabelle 3 sind die an den Proben der Mischungen 5 bis 8 ermittelten Induktionsperioden, die bei der Umluftofenalterung erhalten wurden, zusammengefaßt. Es wurden jeweils mindestens 5 Proben gleichzeitig gealtert, über die dabei erhaltenen Werte wurde dann gemittelt.

Tabelle 3: Alterungsergebnisse der Mischungen 5 bis 8

| Mischungs-Nr. | Induktionsperiode [h] bei | | |
|---|---|---|---|
| | 180°C | 165°C | 150°C |
| 5 | 80 | 300 | 1200 |
| 6 | 10 | 35 | 100 |
| 7 | 84 | 280 | 1180 |
| 8 | 80 | 310 | 1260 |

Beispiel 2

a) Mischungsherstellung

Die aus Tabelle 4 ersichtlichen Masseanteile LDPE (Hochdruckpolyethylen; d = 0,918 g/cm$^3$; MFI$_{190/2}$ = 0,2) werden in einem Kneter bei einer Temperatur von 140°C plastifiziert. Nach der Zugabe von 0,3 Masseteilen TBP (4,4'-Thiobis(3,6-di-tert.butylphenol)) und den aus Tabelle 4 ersichtlichen Masseanteilen KS 300 bzw. KS 380 (pyrogene Kieselsäuren mit einer spezifischen Oberfläche von 300 m$^2$/g bzw. 380 m$^2$/g) und FeHe wird bei einer Temperatur von 140 bis 150°C unter Stickstoff homogenisiert. Dann werden 1,2 Masseteile Peroxid (1,3-Bis(tert.butyl-peroxiisopropyl)-benzol) zugegeben und anschließend wird nochmals für 2 Minuten homogenisiert.

Tabelle 4: Zusammensetzung der Mischungen 9 bis 12

| Mischungs-Nr. | Masseanteile [%] der Mischungsbestandteile | | | | | |
|---|---|---|---|---|---|---|
| | LDPE | TBP | KS 300 | KS 380 | FeHe | Peroxid |
| 9 | 98,5 | 0,3 | – | – | – | 1,2 |
| 10 | 98,5 | 0,3 | – | – | 0,01 | 1,2 |
| 11 | 97,5 | 0,3 | 1,0 | – | 0,01 | 1,2 |
| 12 | 97,5 | 0,3 | – | 1,0 | 0,01 | 1,2 |

b) Probenherstellung

Die in der vorstehend beschriebenen Weise erhaltenen Mischungen werden granuliert und entsprechend Beispiel 1 zu 0,1 mm dicken Folien verpreßt. Die Vernetzung der Folien erfolgt durch 15minütiges Erhitzen in der Presse bei einer Temperatur von 180°C.

c) Alterungsprüfung

Tabelle 5 enthält die mit Hilfe der volumetrischen Sauerstoffaufnahme bei Temperaturen von 135°C bzw. 155°C erhaltenen Induktionsperioden.

Tabelle 5: Alterungsergebnisse der Mischungen 9 bis 12

| Mischungs-Nr. | Induktionsperiode [h] bei | |
|---|---|---|
|  | 135°C | 155°C |
| 9 | 680 | 143 |
| 10 | 27 | 3 |
| 11 | 720 | 168 |
| 12 | 810 | 182 |

Beispiel 3

Die aus Tabelle 6 ersichtlichen Masseanteile EVA (Ethylen-Vinylacetat-Mischpolymerisat; d = 0,932 g/cm$^3$; MFI$_{190/2}$ = 2,16; Vinylacetatgehalt: ca. 10 bis 15 %) und die in Tabelle 6 angegebenen Masseanteile TDC, Metakaolinit, Kreide als Füllstoff und FeHe werden bei einer Temperatur von 120 bis 130°C entsprechend Beispiel 1 gemischt. Aus diesen Mischungen werden entsprechend Beispiel 1 durch 5minütiges Pressen bei 130°C 0,1 mm dicke Folien hergestellt und bei Raumtemperatur mit Elektronenstrahlen der Dosis 200 kGy vernetzt. Die analog Beispiel 1 durch volumetrische Sauerstoffauf-

-12-      VPA 83 P 3162 E

nahme bei 135°C ermittelten Induktionsperioden sind in Tabelle 6 zusammengestellt.

Tabelle 6: Zusammensetzung und Alterungsergebnisse der Mischungen 13 bis 18

| Mischungs-Nr. | Masseanteile [%] der Mischungsbestandteile | | | | | Induktionsperiode [h] bei 135°C |
|---|---|---|---|---|---|---|
| | EVA | TDC | Metakao-linit | Kreide | FeHe | |
| 13 | 99,5 | 0,5 | – | – | – | 582 |
| 14 | 99,5 | 0,5 | – | – | 0,01 | 14 |
| 15 | 98,0 | 0,5 | 1,5 | – | 0,01 | 617 |
| 16 | 63,1 | 0,3 | – | 36,6 | – | 412 |
| 17 | 63,1 | 0,3 | – | 36,6 | 0,01 | 3 |
| 18 | 61,6 | 0,3 | 1,5 | 36,6 | 0,01 | 604 |

## Beispiel 4

Die aus Tabelle 7 ersichtlichen Masseanteile eines handelsüblichen Polypropylens PP (d = 0,947 g/cm$^3$; MFI$_{190/2}$ = 1), dem durch 70stündige Kaltextraktion mit Diethylether die enthaltenen Stabilisatoren entzogen wurden, werden bei einer Temperatur von ca. 200 bis 210°C entsprechend Beispiel 1 mit den in Tabelle 7 angegebenen Masseanteilen eines Oxidationsinhibitors OJ (Pentaerythrityl-tetrakis-3(3,5-di-tert.butyl-4-hydroxyphenyl)-propionat) sowie von KS 380 und FeHe gemischt. Aus den Mischungen werden entsprechend Beispiel 1 durch 5minütiges Pressen bei 200°C 0,1 mm dicke Folien hergestellt. Die entsprechend Beispiel 1 durch volumetrische Sauerstoffaufnahme bei 135°C ermittelten Induktionsperioden sind in Tabelle 7 zusammengestellt.

0127054

Tabelle 7: Zusammensetzung und Alterungsergebnisse der Mischungen 19 bis 21

| Mischungs-Nr. | Masseanteile [%] der Mischungsbestandteile | | | | Induktions-periode [h] bei 135°C |
|---|---|---|---|---|---|
| | PP | OJ | KS 380 | FeHe | |
| 19 | 99,8 | 0,2 | – | – | 612 |
| 20 | 99,8 | 0,2 | – | 0,01 | 23 |
| 21 | 98,3 | 0,2 | 1,5 | 0,01 | 758 |

7 Patentansprüche

Patentansprüche

1. Verwendung von gefällten oder pyrogenen, hochdispersen amorphen Kieselsäuren oder von Gemischen aus hochdispersen Kieselsäuren und hochdispersen Aluminiumoxiden, jeweils mit einer Partikelgröße bis zu 50 µm bzw. einer Agglomeratgröße bis zu 100 µm, neben üblichen Oxidationsinhibitoren und/oder Metalldesaktivatoren als zusätzliche stabilisierende Komponente für mit Übergangsmetallen in Berührung stehende bzw. Übergangsmetalle enthaltende organische Polymere zur Inhibierung der thermisch beschleunigten oxidativen Alterung.

2. Verwendung der stabilisierenden Komponente nach Anspruch 1, d a d u r c h   g e k e n n z e i c h - n e t ,   daß sie in Masseanteilen von 0,1 bis 5 %, bezogen auf das Polymere, verwendet wird.

3. Verwendung der stabilisierenden Komponente nach Anspruch 2, d a d u r c h   g e k e n n z e i c h - n e t ,   daß sie in Masseanteilen von 0,5 bis 2 % in den Polymeren enthalten ist.

4. Verwendung der stabilisierenden Komponente nach einem der Ansprüche 1 bis 3 neben in das Polymernetzwerk einbaubaren bzw. eingebauten Oxidationsinhibitoren.

5. Verwendung der stabilisierenden Komponente nach einem oder mehreren der Ansprüche 1 bis 4 zusammen mit einer Stabilisatorkombination aus oligomerem 2,2,4-Trimethyl-1,2-dihydrochinolin als Oxidationsinhibitor und N,N'-Bis-salicyloyl-hydrazin als Metalldesaktivator.

6. Verwendung der stabilisierenden Komponente nach einem oder mehreren der Ansprüche 1 bis 5 zur Stabilisierung von Reaktionsharzen, Thermoplasten, Elastomeren oder vernetzten Polyolefinen.

7. Verwendung der stabilisierenden Komponente nach einem oder mehreren der Ansprüche 1 bis 6 bei anorganische Füllstoffe und/oder Verstärkungsmittel enthaltenden organischen Polymeren.